# NEUE EUROPÄISCHE PATENTSCHRIFT

(11) **EP 0 145 644 B2**
(45) Veröffentlichungstag und Bekanntmachung des Hinweises auf die Entscheidung über den Einspruch: **15.06.1994**
(45) Hinweis auf die Patenterteilung: 31.10.1990
(21) Anmeldenummer: 84730128.0
(22) Anmeldetag: 30.11.1984
(51) Int. Cl.: F16G 11/12

(54) **Spannvorrichtung für Spannstränge, insbesondere Ketten oder Gurte**
Device for tensioning lines, especially chains or belts
Dispositif tendeur, en particulier pour chaînes ou sangles

(30) Priorität: 06.12.1983 DE 3344487
(43) Veröffentlichungstag der Anmeldung: 19.06.1985
(73) Patentinhaber: RUD-Kettenfabrik Rieger & Dietz GmbH u. Co., D-73406 Aalen (DE)
(72) Erfinder: Smetz, Reinhard, Dipl.-Ing., D-8860 Baldingen (DE); Speich, Helmut, D-7081 Hüttlingen (DE)
(74) Vertreter: Böning, Manfred, Dr.-Ing.

(56) Entgegenhaltungen:
- DE-A- 3 017 371
- FR-A- 2 407 097
- FR-A- 2 424 152
- GB-A- 2 105 805
- GB-A- 2 108 616
- US-A- 2 993 680
- US-A- 4 199 182
- LUEGER, Lexikon der Technik, Band 1 - Grundlagen des Maschinenbaus - 1960, Deutsche Verlags-Anstalt Stuttgart, Seite 530

## Beschreibung

Die Erfindung betrifft eine Spannvorrichtung nach dem Oberbegriff des Patentanspruches 1.

Eine Spannvorrichtung der in Betracht gezogenen Art ist z.B. aus der US-A-4 199 182 (FR-A-2 407 097) bekannt. Bei der bekannten Spannvorrichtung ist den Zähnen des Klinkenrades ein Sperrmechanismus zugeordnet, dessen Sperrelement von einem gegen die Wirkung einer Feder in sich gegenüberliegenden Seitenwänden der Vorrichtung geführten, hin- und herbewegbaren Schieber gebildet wird. Bei derartigen auch als Zurr-Ratschen bezeichneten Spannvorrichtungen sind dem Durchmesser der Klinkenräder bauliche Grenzen gesetzt und die Zahl ihrer Zähne ist aus Festigkeitsgründen begrenzt. Sie beträgt regelmäßig 11, was einem Zahnteilungswinkel von etwa 33° entspricht. Ein derart großer Teilungswinkel macht es häufig unmöglich, die durch Betätigen des im allgemeinen von einem Schwenkhebel gebildeten Antriebsteils an sich erreichbare hohe Vorspannkraft auch nur annähernd zu haltten, da einerseits zum Einrasten der Sperrklinke in die nächstfolgende Zahnlücke des Klinkenrades noch eine Weiterbewegung des Antriebsteiles nötig wäre, die jedoch kräftemäßig nicht zu bewältigen ist und andererseits beim Einrasten der Sperrklinke in die erreichte Zahnlücke eine Rückdrehung des Klinkenrades von im ungünstigsten Fall nur wenig weniger als 33° in Kauf genommen werden muß.

Um bei vorgegebener Größe und Zähnezahl eines Klinkenrades die Sperrsprünge zu verkleinern, hat man bei einer aus LUEGER, Lexikon der Technik, Bd. 1, S. 530, bekannten Klinkensperre mehrere Klinken verwendet, die schwenkbar auf in Umfangsrichtung des Klinkenrades betrachtet hintereinander angeordneten Achsen gelagert sind. Eine derartige Anordnung setzt nicht nur das Vorhandensein stabiler Lager für die Achsen der Klinken voraus, sondern beansprucht auch vergleichsweise viel Raum, so daß sie für Spannvorrichtungen der hier zur Diskussion stehenden Art praktisch ungeeignet ist, zumal hierein von einem Spannhebel gebildetes, mit einer verschiebbaren Antriebsklinke versehenes Antriebsteil verwendet wird, das zusätzlich die Aufgabe hat, die Wirksamkeit des Sperrmechanismus bei Bedarf aufzuheben.

Der Erfindung liegt die Aufgabe zugrunde, eine Spannvorrichtung der in Betracht gezogenen Gattung zu schaffen, die es trotz Beibehaltung üblicher Klinkenräder mit einem vergleichsweise großen Teilungswinkel ermöglicht, die durch eine Rückdrehung des Klinkenrades bis zu dessen Arretierung auftretenden Vorspannkaftverluste kleiner als bei den bekannten Spannvorrichtungen einschlägiger Art zu halten, und dies ohne Inkaufnahme von die Handhabung der bekannten Spannvorrichtung erschwerenden Nachteilen.

Diese Aufgabe wird erfindungsgemäß durch die Merkmale des Patentanspruches 1 gelöst.

Die erfindungsgemässe Spannvorrichtung bietet den Vorteil, daß auf einfache Weise ohne wesentliche Veränderung des Grundaufbaues bekannter Spannvorrichtungen mit diesen Vorspannkräfte gehalten werden können, die weit weniger von den maximal aufbringbaren Vorspannkräften abweichen, als dies bisher der Fall war.

Um auch die Vorspannkräfte bezüglich ihrer Maximalwerte steigern zu können, empfiehlt es sich, die Rastzähne des Klinkenrades so auszubilden, wie dies in Unteranspruch 4 beschrieben ist.

Weitere Einzelheiten und Merkmale der erfindungsgemässen Spannvorrichtung ergeben sich aus den weiteren Unteransprüchen, den beigefügten Figuren und der nachfolgenden Beschreibung. Es zeigen
Figur 1 die Seitenansicht einer Spannvorrichtung,
Figur 2 eine Draufsicht auf die Spannvorrichtung gemäßt Figur 1,
Figur 3 eine Einzelheit der Spannvorrichtung gemäß Figuren 1 und 2 bei veränderter Stellung des Antriebsteiles,
Figur 4 ein modifiziertes Ausführungsbeispiel einer Spannvorrichtung.

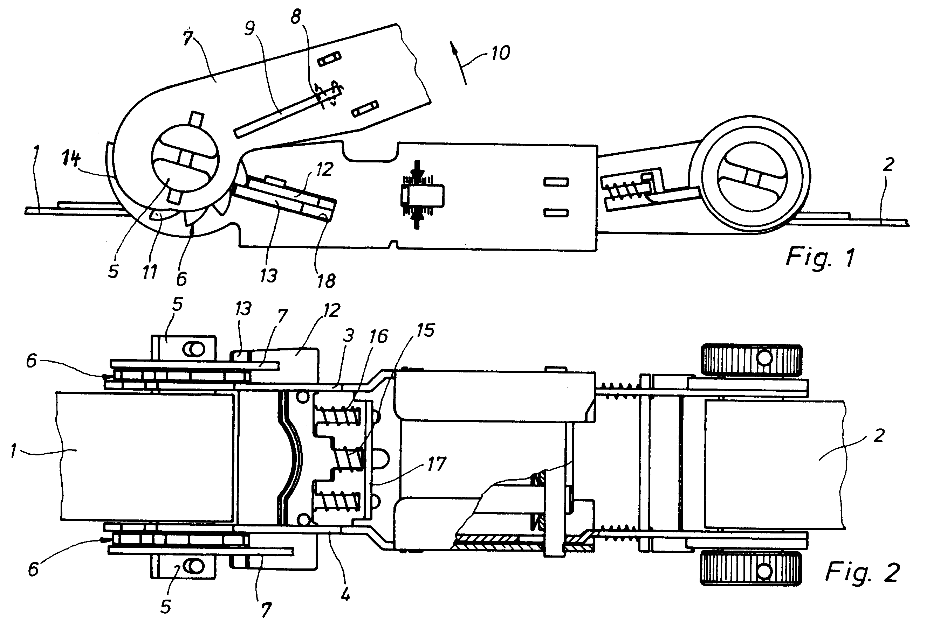

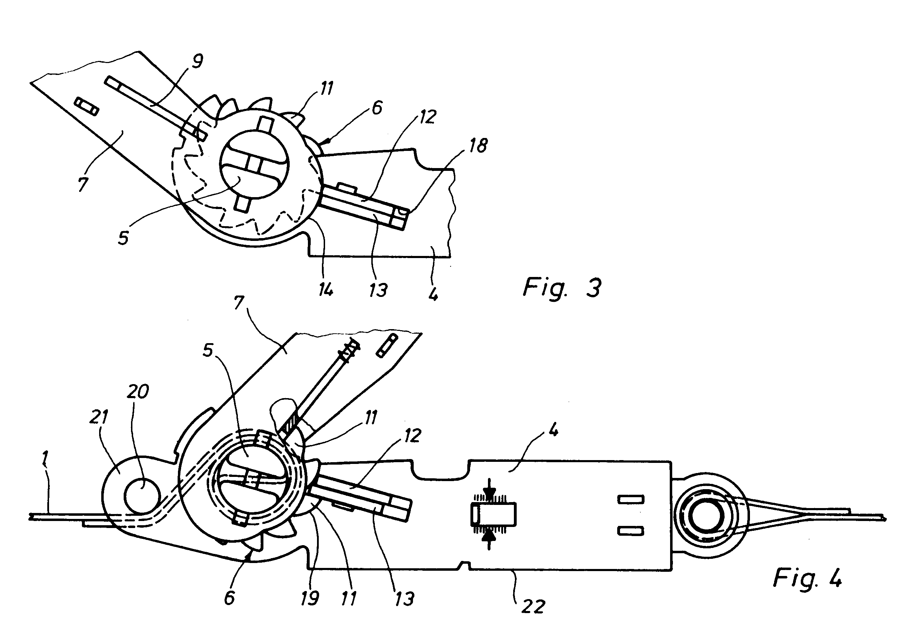

Die in den Figuren 1-3 dargestellte Spannvorrichtung ist als Ratsche mit einer integrierten Vorspannkraftanzeigevorrichtung ausgebildet. Sie steht mit zwei v on Gurten gebildeten Spannsträngen 1 und 2 in Verbindung. Der Spannstrang 1 ist mit einem drehbar in Seitenwänden 3 und 4 gelagerten Antriebselement 5 verbunden. Zum Antrieb des drehfest mit zwei Klinkenräder 6 verbundenen Antriebselements dient ein Antriebsteil 7, das im dargestellten Fall von einem Schwenkhebel gebildet wird und in dem gegen die Wirkung einer Feder 8 verschiebbar eine Antriebsklinke 9 geführt ist. Das Antriebsteil 7 ist schwenkbar auf dem Antriebselement 5 gelagert. Bei Bewegung des Antriebsteiles 7 in Richtung des Pfeiles 10, d.h. entgegen dem Uhrzeigesinn, nimmt die Antriebsklinke 9 das Antriebselement 5 mit. Beim Zurückführen des Antriebsteiles 7 wird Klinkenrad dagegen von einem Sperrmechanismus gehalten, der mehrere mit den Rastzähnen 11 des Klinkenrades 6 in Eingriff bringbare Sperrelemente 12 und 13 aufweist. Die Sperrelemente lassen sich beim Lösen der Spannstränge 1 und 2, wie in Figur 3 angedeutet, durch Steuerkurven 14 gemeinsam aus den Lükken der Rastzähne 11 des Klinkenrades 6 herausbewegen, und zwar gegen die Wirkung von Federn 15 bzw. 16, die sich gegen ein Querjoch 17 abstützen. Die Sperrelemente 12 und 13 werden im dargestellten Fall von Schiebern gebildet, die gemeinsam in Schlitzen 18 der Seitenwände 3 und 4 geführt sind.

Dadurch, daß jeder Lücke zwischen den Rastzähnen 11 des Klinkenrades 6 mehrere Sperrelemente 12, 13 zugeordnet sind, läßt sich das Klinkenrad in Positionen arretieren, die winkelmässig um einen geringeren Betrag voneinander abweichen als der Teilungswinkel der Zähne des Klinkenrades.

Um möglichst grosse Vorspannkräfte realisieren zu können, empfiehlt es sich, die Rastzähne 11 des Klinkenrades 6 so anzuordnen, daß der Zahnrücken 19 des in der Sperrstellung des Klinkenrades 6 jeweils mit einem der Sperrelemente 12 oder 13 in Eingriff stehenden Rastzahnes 11 dem freien Ende des Antriebsteiles 7 abgewandt ist, wie dies die Figur 4 zeigt. In einem solchen Falle sollte außerdem im Abstand vom Antriebselement 5 ein Führungsorgan 20 für den mit dem Antriebselement 5 verbundenen Spannstrang 1 vorgesehen sein. Dieses Führugsorgan ist vorzugsweise drehbar in gabelartigen Verlängerungen 21 der Seitenwände 3 und 4 gelagert.

Das Führungsorgan 20 ist so positioniert, daß die durch den Spannstrang in die Spannvorrichtung eingeleiteten Spannkräfte im wesentlichen parallel zur Auflagefläche 22 der Spannvorrichtung gerichtet sind.

## Patentansprüche

1. Spannvorrichtung für Spannstränge (1,2), insbesondere Ketten oder Gurte, mit einem zum Aufwickeln des Spannstranges dienenden drehbaren Antriebselement (5), mindestens einem drehfest mit diesem verbundenen richtungsorientierte Rastzähne (11) aufweisenden Klinkenrad (6) sowie einem zum Einleiten der Drehbewegung in das Antriebselement (5) dienenden, von einem schwenkbar auf diesem gelagerten Spannhebel gebildeten Antriebsteil (7), an dem eine mit dem Klinkenrad (6) zusammenwirkende Antriebsklinke (9) gegen die Wirkung einer Feder (8) verschiebbar gelagert ist und das mit mindestens einer Steuerkurve (14) zum Überführen eines dem Klinkenrad (6) zugeordneten, ein als Schieber ausgebildetes Sperrelement aufweisenden Sperrmechanismus (12,13,15,16) in eine unwirksame Stellung versehen ist, wobei die Zähne (11) des Klinkenrades (6) so geformt sind, daß sie bei Bewegung des Antriebsteiles (7) in eine Richtung durch den Sperrmechanismus festgehalten werden, während sie bei der Bewegung des Antriebsteiles (7) in die Gegenrichtung (10) von diesem über die Antriebsklinke (9) mitgenommen werden, dadurch gekennzeichnet, daß der Sperrmechanismus mehrere nacheinander und einzeln mit jeweils einem Rastzahn (11) des Klinkenrades (6) in Eingriff bringbare, als Schieber ausgebildete Sperrelemente (12,13) aufweist, die es gestatten, das Klinkenrad in Positionen zu arretieren, die winkelmäßig um einen geringeren Betrag voneinander abweichen als der Teilungswinkel der Rastzähne, und daß die Sperrelemente (12, 13) durch die Steuerkurve (14) gemeinsam aus den Lücken der Rastzähne (11) des Klinkenrades (6) herausbewegbar sind.

2. Spannvorrichtung nach Anspruch 1,
dadurch gekennzeichnet, daß die Sperrelemente (12, 13) sich über versetzt zueinander angeordnete Federn (15,16) gegen ein Querjoch (17) abstützen.

3. Spannvorrichtung nach Anspruch 1 oder 2, dadurch gekennzeichnet, daß sie mit zwei Sperrelementen (12,13) versehen ist, deren seitliche Enden gemeinsam in jeweils einem Schlitz (18) der Seitenwände (3, 4) der Spannvorrichtung geführt sind.

4. Spannvorrichtung nach einem der Ansprüche 1 bis 3, dadurch gekennzeichnet, daß die Rastzähne (11) des Klinkenrades (6) so geformt sind, daß derZahnrücken (19) des in der Sperrstellung des Klinkenrades (6) jeweils mit dem Sperrmechanismus (12, 13) in Eingriff stehenden Rastzahnes (11) dem freien Ende des Antriebsteiles (7) abgewandt ist (Figur 4).

5. Spannvorrichtung nach einem der Ansprüche 1 bis 4, dadurch gekennzeichnet, daß im Abstand vom Antriebselement (5) ein Führungsorgan (20) für den mit dem Antriebselement (5) verbindbaren Spannstrang (1) angeordnet ist.

6. Spannvorrichtung nach einem der Ansprüche 1 bis 5, dadurch gekennzeichnet, daß sie Seitenwände (3, 4) zur drehbaren Lagerung des Antriebselementes (5) aufweist, die gabelartige Verlängerungen (21) zur Aufnahme eines Führungsorgans (20) fürden Spannstrang (1) bilden.

7. Spannvorrichtung nach Anspruch 5 oder 6, dadurch gekennzeichnet, daß das Führungsorgan (20) drehbar ist.

8. Spannvorrichtung nach einem der Ansprüche 5 bis 7, dadurch gekennzeichnet, daß das Führungsorgan (20) derart positioniert ist, daß die durch den Spannstrang (1) in die Spannvorrichtung eingeleiteten Spannkräfte im wesentlichen parallel zur Auflagefläche (22) derSpannvorrichtung gerichtet sind.

## Claims

1. A device for tensioning lines (1, 2), especially chains or belts, comprising a rotatable drive element (5) for winding the tension line, at least one ratchet wheel (6) having directionally- oriented teeth (11) and non-rotatably connected to the drive element, and a drive part (7) for initiating the rotary motion in the drive element (5) and against which a drive pawl (9) co-operating with the ratchet wheel (6) is mounted so as to be movable against the action of a spring (8), the drive part having at least one cam (14) for moving a locking mechanism (12, 13, 15, 16) comprising a locking element in the form of a slide
and associated with the ratchet wheel (6) into an inoperative position, the teeth (11) of the ratchet wheels (6) being shaped so that, when the drive part (7) moves in one direction, they are held by the locking mechanism whereas, when the drive part (7) moves in the opposite direction (10), it drives them over the pawl (9), characterised in that the locking mechanism comprises a numberoflocking elements (12,13) which can be successively brought into engagement with the teeth (11) on the ratchet wheel (6) and are in the form of slides which are adapted to lock the ratchet wheel (6) in positions which differfrom one another by a smaller angle than the pitch angle of the teeth (11), and that the control cam (14) is adapted to move the locking elements (12, 13) jointly out of the gaps between the teeth (11) of the ratchet wheel (6).

A tensioning device according to claim 1, characterised in that the locking elements (12, 13) bear against a transverse yoke (17) via springs (15, 16) which are staggered with respect to one another.

A tensioning device according to claim 1 or 2, characterised in that it comprises two locking elements (12, 13) having their ends jointly guided in a respective slot (18) in the side walls (3, 4) of the tensioning device.

A tensioning device according to any one of claims 1 to 3, characterised in that the teeth (11) of the ratchet wheel (6) are shaped so that, when the ratchet wheel (6) is in the locked position and the teeth (11) are engaging a respective locking mechanism (12 or 13), the backs (19) of the teeth are remote from the free end of the drive part (7) (Fig. 4).

A tensioning device according to any one of claims 1 to 4, characterised in that a means (20) for guiding the tension line (1) for connection to the drive element (5) is disposed at a distance from the drive element (5).

A tensioning device according to any one of claims 1 to 5, characterised in that it has side walls (3, 4) for rotatably mounting the drive element (5) and forming forked extensions (21) for receiving a means (20) for guiding the tension line (1).

7. A tensioning device according to claim 5 or 6, characterised in that the guide means (20) is rotatable.

8. A tensioning device according to any one of claims 5 to 7, characterised in that the guide means (20) is positioned so that the tension forces introduced by the tension line (1) into the tensioning device extend substantially parallel to the surface (22) on which the tensioning device rests.

## Revendications

1. Dispositif de mise en tension pour brins de tension (1, 2), notamment pour chaînes ou sangles, comprenant un élément d'entraînement (5) rotatif, servant à enrouler le brin de tension, au moins une roue à rochet (6), présentant des dents d'arrêt (11) orientées dans un sens donné, reliées solidairement en rotation à cet élément d'entraînement, ainsi qu'une pièce d'entraînement (7) servant à imprimer le mouvement de rotation à l'élément d'entraînement (5) et formé d'un levier de tension articulé mobile en oscillation sur cet élément, sur lequel un cliquet d'entraînement (9) coopérant avec la roue à rochet (6) est monté mobile pour pouvoir coulisser à l'encontre de l'action d'un ressort (8) et qui est muni d'au moins une came de commande (14) servant à faire passer en position inactive un mécanisme de verrouillage (12, 13, 15, 16), associé à la roue à rochet (6) et présentant un élément de blocage formé d'un coulisseau, tandis que la forme des dents (11) de la roue à rochet (6) est telle que, lors d'un déplacement de la pièce d'entraînement (7) dans un sens, elles sont immobilisées par le mécanisme de verrouillage, tandis que, lors du mouvement de la pièce d'entraînement (7) dans le sens opposé elles sont entraînées par cette pièce par l'intermédiaire du cliquet d'entraînement (9), caractérisé en ce que le mécanisme de verrouillage comporte plusieurs éléments différents de verrouillage (12,13) qui peuvent être amenés en prise individuellement avec une dent d'encliquetage (11) de la roue à rochet (6), et qui sont constitués par des coulisseaux, et qui permettent d'immobiliser la roue à rochet dans des positions qui sont séparées angulairement les unes des autres d'une valeur plus faible que le pas angulaire des dents d'encliquetage, et en ce que les éléments de verrouillage (12, 13) peuvent être expulsés en commun des creux de denture des dents d'encliquetage (11) de la roue à rochet (6) par la came de commande (14).

2. Dispositif de mise en tension selon la revendication 1, caractérisé en ce que les éléments de verrouillage (12, 13) s'appuient sur un étrier transversal (17) par l'intermédiaire de ressorts (15, 16) disposés d'une manière décalée entre eux.

3. Dispositif de mise en tension selon l'une des revendications 1 ou 2, caractérisé en ce qu'il comporte deux éléments de verrouillage (12,13) dont les extrémités latérales sont guidées en commun, chacune dans une fente (18) d'une paroi latérale associée (3, 4) du dispositif de mise en tension.

4. Dispositif de mise en tension selon une quelconque des revendications 1 à 3, caractérisé en ce que la forme des dents d'encliquetage (11) de la roue à rochet (6) est telle que le dos (19) des dents (11) se trouvant à chaque fois en prise avec le mécanisme de verrouillage (12,13) lorsque la roue à rochet (6) est en position de verrouillage, est tourné du côté opposé à l'extrémité libre de la pièce d'entraînement (7) (figure 4).

5. Dispositif de mise en tension selon l'une quelconque des revendications 1 à 4, caractérisé en ce qu'il est prévu, à une certaine distance de l'élément d'entraînement (5), un organe (20) de guidage du brin de tension (1) devant être attaché à cet élément d'entraînement (5).

6. Dispositif de mise en tension selon l'une quelconque des revendications 1 à 5, caractérisé en ce qu'il comporte des parois latérales (3, 4) servant au montage rotatif de l'élément d'entraînement (5) et formant des prolongements (21), en forme de fourche, destinés à recevoir un organe (20) de guidage du brin de tension (1).

7. Dispositif de mise en tension selon la revendication 5 ou 6, caractérisé en ce que l'organe de guidage (20) est un organe rotatif.

8. Dispositif de mise en tension selon une quelconque des revendications 5 à 7, caractérisé en ce que la position de l'organe de guidage (20) esttel- le que les contraintes de tension s'exerçant dans le dispositif de mise en tension du fait du brin de serrage (1) sont orientés d'une manière pratiquement parallèle à la surface d'appui (22) du dispositif de mise en tension.
